# EUROPÄISCHE PATENTSCHRIFT

(11) **EP 0 476 167 B1**
(45) Veröffentlichungstag und Bekanntmachung des Hinweises auf die Patenterteilung: **05.07.1995**
(21) Anmeldenummer: 90117969.7
(22) Anmeldetag: 18.09.1990
(51) Int. Cl.: G05B 19/409

(54) **Verfahren zur Simulation der spanenden Bearbeitung von Werkstücken**
Method to simulate cutting machining for workpieces
Méthode de simulation d'usinage par enlèvement de copeaux pour pièces à usiner

(43) Veröffentlichungstag der Anmeldung: 25.03.1992
(73) Patentinhaber: GRUNDIG Aktiengesellschaft, 90762 Fürth (DE)
(72) Erfinder: Blüthgen, Reiner, W-3004 Isernhagen 1 (DE); Deichmann, Klaus, W-3000 Hannover 1 (DE)
(74) Vertreter: Dreykorn-Lindner, Werner, Dipl.-Ing.

(56) Entgegenhaltungen:
- EP-A- 0 136 404
- EP-A- 0 211 959
- EP-A- 0 308 727
- GB-A- 2 140 937
- PATENT ABSTRACTS OF JAPAN vol. 10, no. 110 (P-450)(2167) 24 April 1986,& JP-A-60 239808 (FANUC) 28 November 1985
- PATENT ABSTRACTS OF JAPAN vol. 11, no. 102 (M-576)(2549) 31 März 1987,& JP-A-61 252045 (TOSHIBA) 10 November 1986,

## Beschreibung

Die Erfindung betrifft ein Verfahren zur Simulation der spanenden Bearbeitung von Werkstücken auf Drehmaschinen gemäß dem Oberbegriff des Anspruchs 1.

Es sind im wesentlichen zwei Arten der Bearbeitungssimulation bei Werkzeugmaschinen bekannt. Bei der einen Art wird der Weg einer theoretischen Werkzeugspitze als Linie auf dem Bildschirm einer NC-Steuerung dargestellt, deswegen auch Liniengrafik genannt; bei der zweiten Art wird der Bereich eines schraffierten Werkstückbildes vom Bildschirm gelöscht, der sich mit einer vereinfacht dargestellten Werkzeugkontur überschneidet, auch Radiergrafik genannt. Diese beiden Arten sind in EP-B 0 129 091 dargestellt. Sie dienen der Kollisionsüberwachung und zeigen auch gravierende Programmierfehler.

In EP-A 308 727 ist für eine Erodiermaschine die Darstellung des Arbeitergebnisses beschrieben. Die Steuerung berechnet den abgetragenen Werkstückausschnitt für jeden Bearbeitungsbefehl und speichert die Ausschnittform ab. Die Addition aller Ausschnitte ergibt das fertige Werkstück. Das Werkstück und die Ausschnitte werden dargestellt.

Eine Abart der Liniengrafik ergibt sich, wenn die theorethische Schneidenspitze rotiert und gleichzeitig eine Vorschubbewegung ausführt. Wie aus tz für Metallbearbeitung, 83 Jg. 1989, Heft 11-12, Seiten 56-58, und aus wt Werkstattstechnik 78 (1988), Seiten 97 bis 99 erkennbar, entsteht dadurch ein flächenhafter Eindruck, der sowohl Kollisionen als auch ungünstige Werkzeugformen und unbearbeitete Bereiche erkennen läßt. Dieses Simulationsverfahren ist jedoch nur für Fräsbearbeitungen geeignet, wobei die Werkstückansicht in Richtung der Fräsachse liegen muß.

Aus der japanischen Offenlegungsschrift JP-A-60 239808 ist ein Verfahren zur Anzeige der Kontur von in ein Werkstück zu bohrenden Löchern bekannt, bei dem die Anzeige in vier Quadranten aufgeteilt ist. Im ersten Quadranten ist die Kontur des Werkzeuges, im zweiten Quadranten die Kontur des zu bearbeitenden Werkstückes, im dritten Quadranten das Werkstück während der Bearbeitung und im vierten Quadranten das fertige Werkstück dargestellt. Im dritten Quadranten sind jeweils die Flächen, die das Werkzeug bzw. das Werkstück angeben mit unterschiedlichen Mustern ausgefüllt.

Aus der japanischen Offenlegungsschrift JP-A-61 252045 ist eine graphische Anzeige eines Bearbeitungsschrittes einer Werkzeugmaschine bekannt, bei der der Hintergrund, das Werkzeug, das Werkstück und die vom Werkzeug überstrichene Fläche des Werkstückes bei einem Bearbeitungsschritt mit verschiedenen Farben gekennzeichnet sind.

Die genannten Verfahren zur Anzeige eines Bearbeitungsschrittes weisen den Nachteil auf, daß der Bediener der Werkzeugmaschine vor dem Beginn der Bearbeitung jeweils nur einen Bearbeitungsschritt, nicht aber den gesamten Bearbeitungsvorgang überblicken kann.

Der Erfindung liegt die Aufgabe Zugrunde, ein Verfahren zur Simulation der spanenden Werkstückbearbeitung vorzuschlagen, das neben Kollisionserkennung auch die visuelle Beurteilung der technologischen Verhältnisse des Bearbeitungsvorgangs erlaubt.

Die Aufgabe wir durch die kennzeichnenden Merkmale des Hauptanspruchs gelöst. Die Lösung nach Anspruch 2 ist eine vereinfachte Ausführungsform, die geringere Rechnerkapazität und -geschwindigkeit erfordert.

Der Überdeckungsgrad bzw. die Ausnutzung der Schneide wird deutlich erkennbar, wenn sich überlappende Flächen durch ein dichteres Muster hervorgehoben werden. Dieses dichtere Muster ergibt sich von selbst, wenn das Muster aufeinanderfolgender Vorschübe versetzt oder in seiner Winkellage geändert wird.

Bei Eilgängen, die keine technologische Wirkung haben, genügt die Darstellung von Linienzügen, um Kollisionen zu erkennen. zusätzlich kann die aktuelle Schneidenposition durch einen Lichtfleck an der Stelle der theoretischen Schneidenspitze angezeigt werden.

Die Länge der definierten Schneidkante kann frei gewählt werden, um sie den Bearbeitungsbedingungen anzupassen. So kann es vorteilhaft sein, bei harten Werkstoffen nur eine geringe Schnittiefe zuzulassen, um Überlastungen des Werkzeugs zu vermeiden.

Das Verfahren läßt sich auf alle bei Drehmaschinen üblichen Werkzeuge, auch auf mehrschneidige, anwenden, wobei es nicht auf deren Rotation ankommt.

Die Erfindung wird an Hand der folgenden Darstellungen naher erläutert. Es zeigen:
Fig. 1 die von der Werkzeugschneide überstrichene Fläche;
Fig. 2 zwei aufeinanderfolgende Flächen;
Fig. 3 die Simulation einer Bohrbearbeitung;
Fig. 4 die Simulation einer Dreh- und Fräsbearbeitung;
Fig. 5 die Simulation einer Einstechbearbeitung;
Fig. 6 die Simulation eines fehlerhaften Programms;
Fig. 7 ein Ablaufdiagramm;

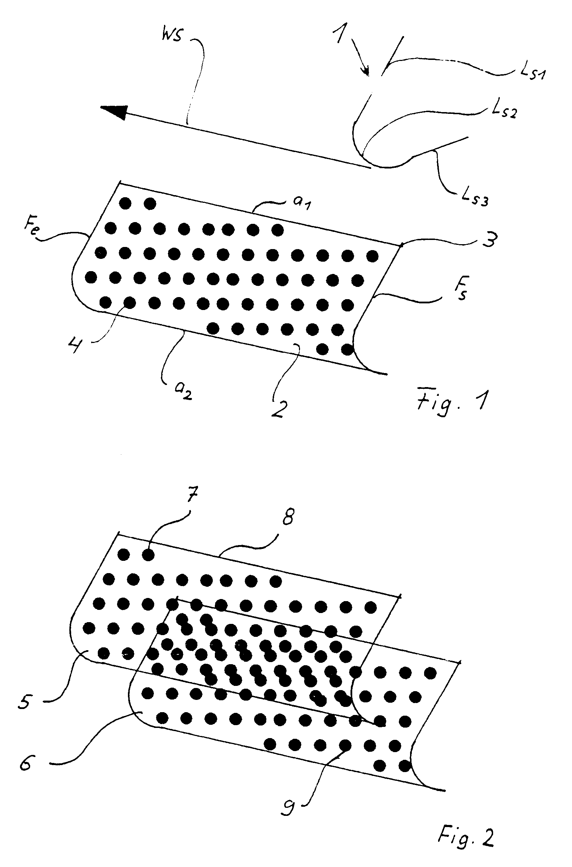

In Fig. 1 ist der zur Zerspannung eines Werkstücks vorgesehene Teil der Schneidkante 1 eines Werkzeugs dargestellt, der sich aus einer Geraden Ls1, einem Kreisbogen Ls2 und einer weiteren Geraden Ls3 zusammensetzt. Das Werkzeug und damit die Schneidkante 1 soll den Verfahrbefehl WS im Arbeitsvorschub ausführen. Dabei wird die Fläche 2 von der Schneidkante 1 überstrichen. Die Fläche 2 wird begrenzt durch den aktiven Teil der Schneidkante am Startpunkt Fs und am Endpunkt Fe, sowie die Äquidistante a1 zum Wegbefehl WS durch den Startpunkt 3 von Ls1 sowie die Äquidistante a2 durch den quer zur Vorschubrichtung am weitesten entfernten Punkt der Schneidkante 1. Die Fläche 2 ist mit einem Punktmuster 4 gefüllt.

Fig.2 zeigt die von der Schneidkante 1 überstrichenen Flächen 5,6 zweier aufeinanderfolgender Arbeitsvorschubbewegungen, die sich teilweise überlappen. Das Punktmuster 7 und die Flächenbegrenzung 8 bleibt dabei auch innerhalb der Fläche 6 sichtbar. Das Punktmuster 9 der Fläche 6 ist so angelegt, daß das vorhergehende Muster nicht überdeckt wird. Dadurch wird der Überdeckungsgrad deutlich sichtbar.

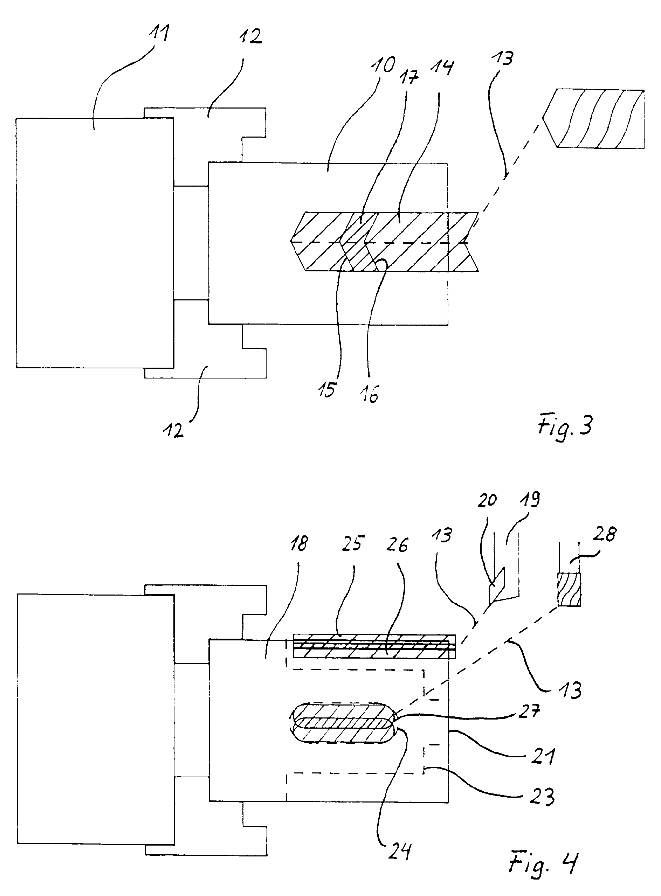

Fig. 3 zeigt die Verhältnisse bei einem Bohrvorgang. Da beim Bohren ins Volle die Zerspanung mit nur einem Teil der Schneidkanten nicht möglich ist, müssen beide Hauptschneiden vollständig als schneidend definiert werden. Das zu bearbeitende Werkstück 10 wird im Spannfutter 11 einer Drehmaschine von Spannbacken 12 gehalten. Die Eilgangbewegung des Werkzeugs ist als gestrichelte Linie 13 dargestellt. Die Vorschubbewegung erscheint als schraffierte Fläche 14, die von den Äquidistanten zur Vorschubrichtung durch die außeren Schneidenpunkte begrenzt wird. Der erste Arbeitsvorschub endet mit der Begrenzung 15 am Endpunkt Fe. Der Bohrer wird dann zum Entspänen zurückgezogen. Der folgende Arbeitsvorschub beginnt am Startpunkt 16. Dadurch wird der Bereich 17 zweimal im Arbeitsvorschub überfahren, was durch die doppelte Schraffur kenntlich wird.

In Fig. 4 ist in einem Spannfutter 11 ein Werkstück 18 eingespannt, daß von einem Drehmeißel 19 mit einer Schneidplatte 20 bearbeitet wird. Die durchgezogene Linie 21 stellt die Abbildung des Rohteils dar, während die gestrichelten Linien 23, 24 das Fertigteil wiedergeben. Von der Drehbearbeitung sind zwei aufeinanderfolgende Schnitte 25, 26 gezeigt, deren Lage zum Rohteil und zueinander deutlich wird.

An dem Werkstück 18 wird darüber hinaus auch die Fräsbearbeitung einer Paßfedernut 27 gezeigt. Der zur Zerspanung vorgesehene Teil der Schneidkanten eines mehrschneidigen Werkzeugs 28 in dieser Ansicht ist ein Kreisbogen. Die Äquidistanten verbinden auch hier wieder die äußersten Punkte der Kreisbögen.

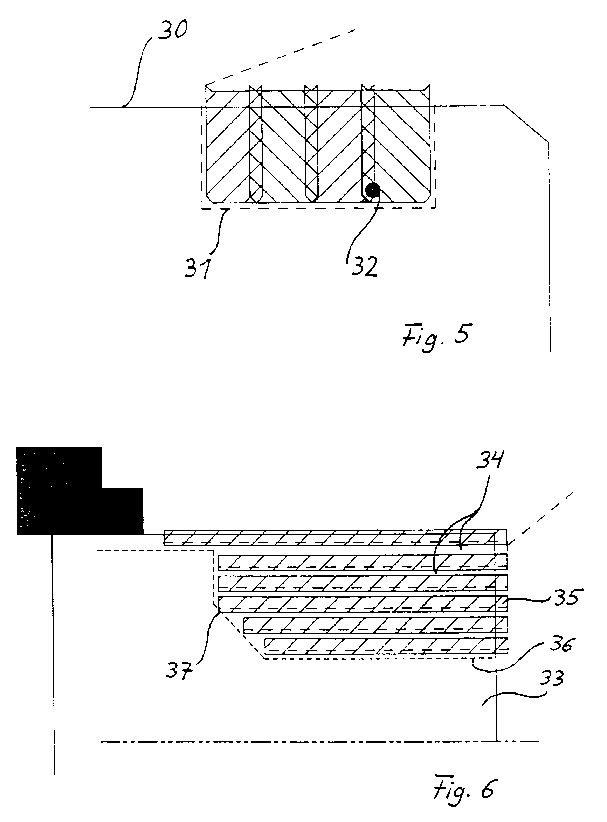

In Fig. 5 wird die Simulation eines Einstechvorgangs dargestellt. Das Werkstück ist als durchgehender Linienzug 30 angedeutet. Die Fertigteilkontur 31 ist gestrichelt. Aufeinanderfolgende Arbeitsvorschübe des Stechmeißels werden durch wechselnde Neigung der Schraffur erkennbar, so daß sich im überschneidenden Zerspanungsbereich ein Rautenmuster ergibt, das sich deutlich von den Zerspanungsbereichen unterscheidet. Der theoretische Werkzeugschneidenpunkt kann zusätzlich als Lichtfleck 32 auf dem Bildschirm erkennbar werden.

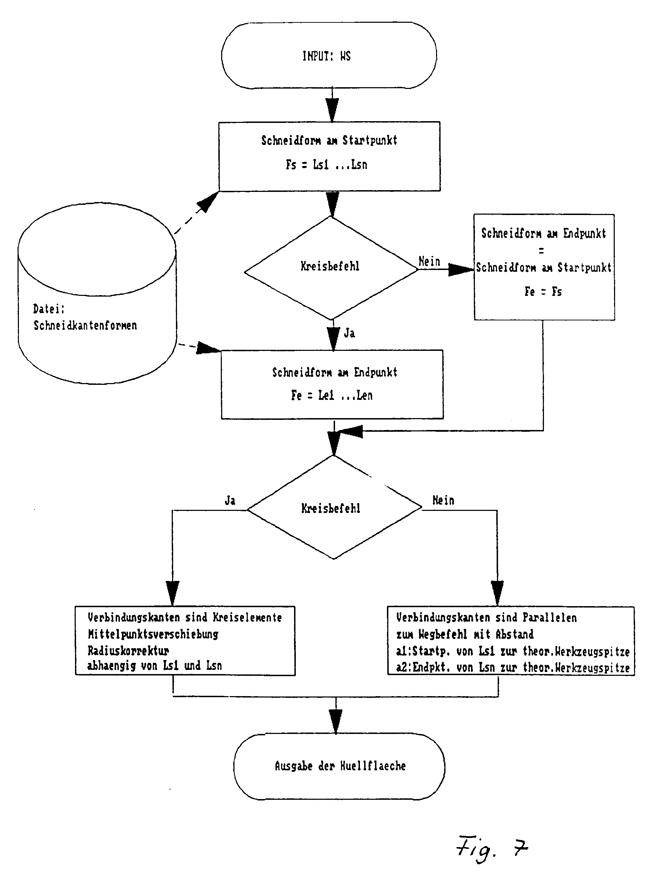

Fig. 6 zeigt die Außendrehbearbeitung eines Werkstücks 33 in mehreren Schnitten. Es wird unmittelbar deutlich, daß die Schnittiefe für die zur Zerspanung vorgesehene Schneide zu groß gewählt wurde. Zwischen aufeinanderfolgenden Schnitten bleiben Materialstege 34 erhalten. Es wird auch erkennbar, daß bei einem der Schnitte 35, daß Werkzeug die Fertigteilkontur 36 in einem Bereich 37 verletzen würde. Fig. 7 ist ein vereinfachtes Ablaufdiagramm zur Erzeugung der Hüllflächen. Ausgangspunkt ist der Verfahrbefehl WS, wobei "S" darauf hinweisen soll, daß nur Wege, die mit Schnittgeschwindigkeit programmiert sind, berücksichtigt werden sollen. Die Schneidenform wird als Linienzug aus Geraden und Kreiselementen generiert und kann in einer Datei abgelegt werden.

Auch bei den Verfahrbefehlen muß zwischen Geraden und Kreisen unterschieden werden, da nur bei Geraden die Schneidform unverändert bleibt. Auch die Äquidistantenberechnung unterscheidet zwischen Geraden und Kreisformen. Die Verbindungskanten bei Kreisbefehlen sind Kreiselemente, die sich aus der Mittelpunktsverschiebung und dem korrigierten Radius ergeben.

## Patentansprüche

1. Verfahren zur Simulation der spanenden Bearbeitung von Werkstücken auf Drehmaschinen auf dem Bildschirm einer numerischen Steuerung bzw. eines Programmiergerätes, auf dem die Rohteilkontur des zu bearbeitenden Werkstückes, die Fertigteilkontur des Werkstückes und die Werkzeugkontur (1) zweidimensional dargestellt werden und wobei die Bewegungsbahn (WS) eines definierten Werkzeugbezugspunktes entsprechend einem Bearbeitungsprogramm dargestellt wird,
**dadurch gekennzeichnet**, daß der zur Zerspanung vorgesehene Teil (LS1 - Lsn) der Schneidkante(n) (1) eines Werkzeuges definiert wird, und daß die von dem Teil der Schneidkante (1) während jedes Arbeitsvorschubes jeweils überstrichene Fläche (2) umrandet und durch ein Muster (4,7,9) kenntlich gemacht wird, wobei jeweils die Muster (4,7,9) der vorhergehenden Arbeitsvorschübe sichtbar bleiben, so daß überlappende Flächen durch ein dichteres Muster hervorgehoben werden.

2. Verfahren zur Simulation der Bearbeitung von Werkstücken nach Anspruch 1 dadurch gekennzeichnet, daß für jeden im Programm niedergelegten Wegbefehl (WS) im Arbeitsvorschub eine umrandete Fläche (2) erzeugt wird.

3. Verfahren zur Simulation der Bearbeitung von Werkstücken nach Anpruch 1 dadurch gekennzeichnet, daß die Flächen (14,25,26) durch Schraffuren kenntlich gemacht werden.

4. Verfahren zur Simulation der Bearbeitung von Werkstücken nach Anspruch 1 dadurch gekennzeichnet, daß die Flächen (2,5,6) durch Punktraster (4,7,9) kenntlich gemacht werden.

5. Verfahren zur Simulation der Bearbeitung von Werkstücken nach Anspruch 1 bis 4 dadurch gekennzeichnet, daß der Referenzpunkt des Musters zwischen zwei aufeinander folgenden Vorschubbewegungen um einen Betrag versetzt wird, der kleiner als der Abstand zweier gleicher Musterelemente ist.

6. Verfahren zur Simulation der Bearbeitung von Werkstücken nach Anspruch 3 dadurch gekennzeichnet, daß der Winkel der Schraffuren zwischen zwei aufeinanderfolgenden Vorschubbewegungen verändert wird.

7. Verfahren zur Simulation der Bearbeitung von Werkstücken nach Anspruch 1 dadurch gekennzeichnet, daß im Eilgang zurückgelegte Werkzeugwege durch die Linie, die der Bahn eines definierten Schneidenpunktes entspricht, dargestellt wird.

8. Verfahren zur Simulation der Bearbeitung von Werkstücken nach Anspruch 1 dadurch gekennzeichnet, daß die aktuelle Schneidenposition durch einen dem Referenzpunkt der Werkzeugschneide entsprechenden Lichtfleck (32) auf dem Bildschirm dargestellt ist.

9. Verfahren zur Simulation der Bearbeitung von Werkstücken nach Anspruch 1 dadurch gekennzeichnet, daß die definierte Schneidkante von Werkzeugen mit einer Hauptschneide nur einen Teil der tatsächlich vorhandenen Schneidenlänge ausmacht.

10. Verfahren zur Simulation der Bearbeitung von Werkstücken nach Anspruch 1 dadurch gekennzeichnet, daß bei mehrschneidigen Werkzeugen die Umrandung der Projektionsfläche als definierte Schneidkante bestimmt wird.

11. Verfahren zur Simulation der Bearbeitung von Werkstücken nach Anspruch 1 dadurch gekennzeichnet, daß die Umrandung der überstrichenen Fläche durch den den Werkzeugschneidenteil darstellenden Linienzug (Ls1 - Lsn) und durch Äquidistante (a1,a2) zum Wegbefehl (WS) erzeugt wird.

## Claims

1. Method for simulating the cutting machining of workpieces on turning machines on the screen of a numerical control or programming device, on which the blank contour of the workpiece to be machined, the finished product contour of the workpiece and the contour (1) of the tool are illustrated in two dimensions, the movement path (WS) of a defined tool reference point being represented in accordance with a machining program, characterized in that the part (LS1 - Lsn), provided for cutting, of the cutting edge(s) (1) of a tool is defined, and in that the surface (2) which is travelled over by the part of the cutting edge (1) during each operational advance is outlined and indicated by a pattern (4, 7, 9), in each case the patterns (4, 7, 9) of the preceding operational advances remaining visible so that overlapping surfaces are highlighted by a denser pattern.

2. Method for simulating machining of workpieces according to Claim 1, characterized in that an outlined surface (2) is produced for each movement instruction (WS), stored in the program, in the operational advance.

3. Method for simulating the processing of workpieces according to Claim 1, characterized in that the surfaces (14, 25, 26) are indicated by hatching.

4. Method for simulating the processing of workpieces according to Claim 1, characterized in that the surfaces (2, 5, 6) are indicated by dot matrices (4, 7, 9).

5. Method for simulating the processing of workpieces according to Claims 1 to 4, characterized in that the reference point of the pattern is offset between two successive advancing movements by an amount which is smaller than the distance between two identical pattern elements.

6. Method for simulating the processing of workpieces according to Claim 3, characterized in that the angle of the hatching is changed between two successive advancing movements.

7. Method for simulating the processing of workpieces according to Claim 1, characterized in that tool movements which are carried out in rapid movement mode are represented by the line which corresponds to the pathway of a defined cutting point.

8. Method for simulating the processing of workpieces according to Claim 1, characterized in that the current cutting position is represented by a lightspot (32), corresponding to the reference point of the tool cutter, on the screen.

9. Method for simulating the processing of workpieces according to Claim 1, characterized in that the defined cutting edge of tools with a main cutter only constitutes part of the actually present cutting length.

10. Method for simulating the processing of workpieces according to Claim 1, characterized in that in the case of multi-cutter tools the outlining of the projection surface is determined as a defined cutting edge.

11. Method for simulating the processing of workpieces according to Claim 1, characterized in that the outlining of the travelled-over surface is produced by the line (Ls1 - Lsn) representing the tool cutting part and by equidistant lines (a1,a2) with respect to the movement instruction (WS).

## Revendications

1. Procédé pour simuler l'usinage, avec formation de copeaux, de pièces à usiner sur des tours, sur l'écran d'une unité de commande numérique ou d'un appareil de programmation, sur lequel le profil de l'ébauche de la pièce à usiner, le profil de la pièce usinée et le profil (1) de l'outil sont représentés en deux dimensions, et selon lequel la trajectoire de déplacement (WS) d'un point de référence défini de l'outil est représentée conformément à un programme d'usinage, caractérisé en ce qu'on définit la partie (LS1-LSn), prévue pour l'enlèvement de copeaux, de la ou des arêtes de coupe (1) d'un outil, et en ce qu'on encadre les surfaces (2) balayées respectivementpar la partie de l'arête de coupe (1) pendant chaque avance de travail et on les caractérise par un dessin (4,7,9), les dessins (4,7,9) des avances de travail précédentes restant respectivement visibles de sorte que des surfaces en chevauchement peuvent être rehaussées par un dessin plus épais.

2. Procédé pour simuler l'usinage de pièces à usiner selon la revendication 1, caractérisé en ce que pour chaque instruction de déplacement (WS) mémorisée dans le programme, une surface encadrée (2) est produite lors de l'avance de travail.

3. Procédé pour simuler l'usinage de pièces à usiner selon la revendication 1, caractérisé en ce que les surfaces (14,25,26) sont caractérisées par des hachures.

4. Procédé pour simuler l'usinage de pièces à usiner selon la revendication 1, caractérisé en ce que les surfaces (2,5,6) sont caractérisées par des réseaux de points (4,7,9).

5. Procédé pour simuler l'usinage de pièces à usiner selon les revendications 1 à 4, caractérisé en ce que le point de référence du dessin est décalé, entre deux déplacements successifs d'avance, d'une distance qui est inférieure à la distance entre deux éléments identiques de dessins.

6. Procédé pour simuler l'usinage de pièces à usiner selon la revendication 3, caractérisé en ce que l'angle des hachures est modifié entre deux déplacements successifs d'avance.

7. Procédé pour simuler l'usinage de pièces à usiner selon la revendication 1, caractérisé en ce que des trajets de retour de l'outil, parcourus à vitesse rapide, sont représentés par la ligne qui correspond à la trajectoire d'un point de coupe défini.

8. Procédé pour simuler l'usinage de pièces à usiner selon la revendication 1, caractérisé en ce que la position actuelle de coupe est représentée sur l'écran par un spot lumineux (32) qui correspond au point de référence des arêtes de l'outil.

9. Procédé pour simuler l'usinage de pièces à usiner selon la revendication 1, caractérisé en ce que l'arête de coupe définie d'outils comportant une arête de coupe principale constitue seulement une partie de la longueur d'arête effectivement présente.

10. Procédé pour simuler l'usinage de pièces à usiner selon la revendication 1, caractérisé en ce que, dans le cas d'outils à plusieurs arêtes de coupe, l'encadrement de la surface de projection est déterminé en tant qu'arête de coupe définie.

11. Procédé pour simuler l'usinage de pièces à usiner selon la revendication 1, caractérisé -en ce que l'encadrement de la surface balayée est obtenu au moyen du trait (Ls1-Lsn) qui représente la partie d'arête de coupe de l'outil, et par des droites équidistantes (a1,a2) en rapport avec l'instruction de déplacement (WS).
